(19) Europäisches Patentamt
European Patent Office
Office européen des brevets

(11) EP 0 744 432 B1

(12) # EUROPÄISCHE PATENTSCHRIFT

(45) Veröffentlichungstag und Bekanntmachung des Hinweises auf die Patenterteilung:
**13.01.1999 Patentblatt 1999/02**

(51) Int Cl.[6]: **C08G 77/06**, C08J 3/12

(21) Anmeldenummer: **96108218.7**

(22) Anmeldetag: **23.05.1996**

(54) **Monodisperse lösliche Organopolysiloxanpartikel**

Monodispersed soluble organopolysiloxane particles

Particules solubles monodispersées d'organopolysiloxane

(84) Benannte Vertragsstaaten:
**AT BE CH DE ES FR GB IT LI NL**

(30) Priorität: **26.05.1995 DE 19519446**

(43) Veröffentlichungstag der Anmeldung:
**27.11.1996 Patentblatt 1996/48**

(73) Patentinhaber: **Wacker-Chemie GmbH
81737 München (DE)**

(72) Erfinder:
- **Geck, Michael, Dr.
84489 Burghausen (DE)**
- **Deubzer, Bernward, Dr.
84489 Burghausen (DE)**
- **Schmidt, Manfred, Prof. Dr.
55294 Bodenheim (DE)**
- **Baumann, Frank, Dr.
84561 Mehring (DE)**

(74) Vertreter: **Fritz, Helmut, Dr. et al
Wacker-Chemie GmbH,
Zentralabteilung Patente,
Marken und Lizenzen,
Hanns-Seidel-Platz 4
81737 München (DE)**

(56) Entgegenhaltungen:
**EP-A- 0 291 939**
**EP-A- 0 335 414**
**EP-A- 0 614 929**
**WO-A-93/23455**
**FR-A- 2 639 950**

- **DATABASE WPI Derwent Publications Ltd., London, GB; AN 93-224366 XP002011996 & JP-A-05 148 364 (SHINETSU CHEM. IND. CO.LTD.) , 15.Juni 1993**
- **DATABASE WPI Derwent Publications Ltd., London, GB; AN 94-260609 XP002011997 & JP-A-06 192 426 (SHINETSU CHEM. IND. CO. LTD.) , 12.Juli 1994**

Bemerkungen:
Die Akte enthält technische Angaben, die nach dem Eingang der Anmeldung eingereicht wurden und die nicht in dieser Patentschrift enthalten sind.

EP 0 744 432 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft aus einem einzigen Molekül bestehende, vernetzte monodisperse lösliche Organopolysiloxanpartikel, die einen mittleren Durchmesser von 5 bis 200 nm aufweisen und deren Herstellung.

Beispielsweise in US-A-4,424,297 sind in Suspension vorliegende Organopolysiloxanpartikel beschrieben, die einen mittleren Durchmesser von 1 bis 100 nm aufweisen. Diese Partikel sind nach Isolierung als Pulver in allen Lösungsmitteln nahezu unlöslich, da die Partikel über noch an den Oberflächen vorhandene reaktive Gruppen, wie kondensationsfähige Alkoxy-, bzw. Silanolgruppen zu größeren Agglomeraten vernetzen.

Für viele Anwendungen ist eine monodisperse, also einheitliche Größe der Partikel erforderlich. In EP A-326 810 sind monodisperse Organopolysiloxanpartikel beschrieben, die einen mittleren Durchmesser von 800 bis 5000 nm aufweisen. Hergestellt werden diese Partikel, indem in wäßrige, verdünnte Ammoniak- oder Aminlösung langsam Methyltrialkoxysilan getropft wird. Das aus der kolloidalen Suspension ausgefallene Pulver wird isoliert und mit einem Silylierungsmittel behandelt. Diese Partikel sind ebenfalls in allen Lösungsmitteln nahezu unlöslich.

In EP-A-335 414 wird ein Organosol von Organopolysiloxanpartikeln mit einem mittleren Teilchendurchmesser von 136 nm beschrieben. Die Partikel sind nach deren Isolation aus der Lösung in keinem Lösemittel mehr in deutlichen Mengen löslich.

Es bestand die Aufgabe, aus einem einzigen Molekül bestehende vernetzte Organopolysiloxanpartikel bereitzustellen, die eine monodisperse Teilchengroßenverteilung innerhalb eines Größenbereichs von 5 bis 200 nm aufweisen und die in einem Lösungsmittel zu mindestens 5 Gew.-% löslich sind.

Die Erfindung betrifft aus einem einzigen Molekül bestehende, vernetzte Organopolysiloxanpartikel, welche aufgebaut sind aus
0,5 bis 80,0 Gew.-% Einheiten der allgemeinen Formel

$$[R_3SiO_{1/2}] \quad \textbf{(1)},$$

0 bis 99,0 Gew.-% Einheiten der allgemeinen Formel

$$[R_2SiO_{2/2}] \quad \textbf{(2)},$$

0 bis 99,5 Gew.-% Einheiten der allgemeinen Formel

$$[RSiO_{3/2}] \quad \textbf{(3)},$$

0 bis 80,0 Gew.-% Einheiten der allgemeinen Formel

$$[SiO_{4/2}] \quad \textbf{(4)},$$

und
0 bis 20,0 Gew.-% Einheiten der allgemeinen Formel

$$[R_aSi(O_{(3-a)/2})\text{-}R^1\text{-}X\text{-}(R^1\text{-}Si(O_{(3-a)/2}))_bR_a] \quad \textbf{(5)},$$

wobei

**R** Wasserstoffatome oder gleiche oder verschiedene einwertige SiC-gebundene, gegebenenfalls substituierte $C_1$- bis $C_{18}$-Kohlenwasserstoffreste,

**$R^1$** gleiche oder verschiedene zweiwertige SiC-gebundene, gegebenenfalls substituierte $C_1$- bis $C_{18}$-Kohlenwasserstoffreste, welche durch zweibindige, beidseitig an Kohlenstoffatome gebundene Reste aus der Gruppe -O-, -COO-, -OOC-, $-CONR^2-$, $-NR^2CO-$ und -CO- unterbrochen sein können,

**$R^2$** ein Wasserstoffatom oder einen Rest R,

**X** einen Rest aus der Gruppe -N=N-, -O-O-, -S-S- und $-C(C_6H_5)_2-C(C_6H_5)_2-$,

**a** die Werte 0, 1 oder 2 und,

**b** die Werte 0 oder 1 bedeuten,
mit der Maßgabe, daß die Summe der Einheiten der allgemeinen Formeln (3) und (4) mindestens 0,5 Gew.-% beträgt, die einen durch simultane statische und dynamische Lichtstreuung meßbaren mittleren Durchmesser von 5 bis 200 nm aufweisen, bei denen mindestens 80 % der Partikel einen Durchmesser besitzen, der höchstens 30 % vom mittleren Durchmesser abweicht, dadurch gekennzeichnet, daß die Partikel in einem Lösungsmittel, das ausgewählt wird aus Toluol, Tetrahydrofuran und Wasser bei 20°C zu mindestens 5 Gew.-% löslich sind.

Die Gewichtsmittel der Molmassen $M_w$ der Organopolysiloxanpartikel betragen typischerweise mindestens $10^5$, insbesondere $5 \times 10^5$ bis höchstens $10^{10}$, insbesondere $10^9$. Die mittleren Durchmesser der Organopolysiloxanpartikel betragen vorzugsweise mindestens 10 und höchstens 150 nm. Vorzugsweise besitzen mindestens 80 % der Partikel einen Durchmesser, der höchstens 20 %, insbesondere höchstens 10 % vom mittleren Durchmesser abweicht.
Bei den Organopolysiloxanpartikeln handelt es sich vorzugsweise um sphärische Mikrogele.

Die Organopolysiloxanpartikel sind intramolekular vernetzt, weisen aber keine intermolekulare Vernetzung zwischen den Organopolysiloxanpartikeln auf. Deshalb sind die Organopolysiloxanpartikel gut in Lösungsmitteln löslich.

Das Lösungsmittel, in dem sich die Organopolysiloxanpartikel zu mindestens 5 Gew.-% lösen, hängt vom Aufbau der Organopolysiloxanpartikel und insbesondere von den sich an der Oberfläche der Organopolysiloxanpartikel befindenden Gruppen ab. Für alle Organopolysiloxanpartikel gibt es ein geeignetes Lösungsmittel. Beispiele für solche Lösungsmittel sind Wasser; Alkohole, wie Methanol, Ethanol, n-Propanol, iso-Propanol; Ether, wie Dioxan, Tetrahydrofuran, Diethylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Cyclohexan, Hexan-Isomerengemische, Heptan, Oktan, Waschbenzin, Petrolether, Benzol, Toluol, Xylole; Ketone, wie Aceton, Methylethylketon, Methyl-isobutylketon; Dimethylformamid, Schwefelkohlenstoff und Nitrobenzol, oder Gemische dieser Lösungsmittel, sowie Monomere, wie Methylmethacrylat oder Styrol und Polymere, wie flüssige Organopolysiloxane.

Die Löslichkeit der Organopolysiloxanpartikel wird bei 20°C bestimmt. Besonders geeignet als Lösungsmittel für Organopolysiloxanpartikel mit Kohlenwasserstoffresten ist Toluol, für Organopolysiloxanpartikel mit Aminoresten ist Tetrahydrofuran und für Organopolysiloxanpartikel mit Sulfonatoresten ist Wasser. Beispielsweise sind organopolysiloxanpartikel mit Kohlenwasserstoffresten in Toluol nahezu unbegrenzt und in flüssigem Polydimethylsiloxan mit einer Viskosität von 35 mPa·s bei 25°C bis zu 15 Gew.-% löslich. Vorzugsweise sind die Organopolysiloxanpartikel in einem Lösungsmittel, das ausgewählt wird aus Toluol, Tetrahydrofuran und Wasser, zu mindestens 10 Gew.-%, insbesondere zu mindestens 15 Gew.-% löslich.

Beispiele für unsubstituierte Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentyl-rest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest, sowie der Fluorenylrest.

Beispiele für substituierte Kohlenwasserstoffreste als Rest R sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Aminoalkylreste, wie der 3-Aminopropyl-, N-(2-Aminoethyl)-3-aminopropyl- und N-(2-Aminoethyl)-3-amino-(2-methyl)propylrest; Aminoarylreste, wie der Aminophenylrest; quarternäre Ammoniumreste; Acryloxyalkylreste, wie der 3-Acryloxypropyl- und 3-Methacryloxypropylrest; Hydroxyalkylreste, wie der Hydroxypropylrest; Phosphonsäurereste; Phosphonatreste und Sulfonatreste, wie der 2-Diethoxyphosphonato-ethyl- oder der 3-Sulfonato-propylrest.

Bei dem Rest R handelt es sich bevorzugt um unsubstituierte und substituierte $C_1$- bis $C_6$-Alkylreste, Wasserstoff und den Phenylrest, insbesondere um den Methyl-, Phenyl-, Vinyl-, Allyl-, Methacryloxypropyl-, 3-Chlorpropyl-, 3-Mercaptopropyl-, 3-Aminopropyl- und den (2-Aminoethyl)-3-aminopropyl-Rest, Wasserstoff und Si-C gebundene quarternäre Ammoniunreste.

Beispiele für zweiwertige Kohlenwasserstoffreste $R^1$ sind gesättigte Alkylenreste wie der Methylen- und Ethylenrest, sowie Propylen-, Butylen-, Pentylen-, Hexylen-, Cyclohexylen- und Octadecylenreste oder ungesättigte Alkylen- oder Arylenreste, wie der Hexenylenrest und Phenylenreste und insbesondere Reste der Formeln (6)

$$-(CH_2)_3N(R^3)-C(O)-(CH_2)_2-C(CN)(CH_3)- \qquad \textbf{(6)},$$

in der
**$R^3$** ein Wasserstoffatom, einen Methyl- oder Cyclohexylrest bedeutet und (7)

$$-(CH_2)_3\text{-}O\text{-}C(O)\text{-}(CH_2)_2\text{-}C(O)\text{-} \qquad \textbf{(7)},$$

Bevorzugte Reste X sind -N=N- und -O-O-.
Besonders bevorzugte Einheiten der allgemeinen Formel (5) fallen unter die allgemeine Formel (8)

$$[(CH_3)_aSi(O_{(3-a)/2})\text{-}(CH_2)_3\text{-}N(R^3)\text{-}C(O)\text{-}(CH_2)_2\text{-}C(CN)(CH_3)\text{-}N=]_2$$

in der **a** und **$R^3$** die vorstehenden Bedeutungen aufweisen.
Vorzugsweise enthalten die Organopolysiloxanpartikel

1 bis 80,0 Gew.-% Einheiten der allgemeinen Formel (1),
0 bis 98,0 Gew.-% Einheiten der allgemeinen Formel (2),
0 bis 99,0 Gew.-% Einheiten der allgemeinen Formel (3),
0 bis 50,0 Gew.-% Einheiten der allgemeinen Formel (4) und
0 bis 10,0 Gew.-% Einheiten der allgemeinen Formel (5)

mit der Maßgabe, daß die Summe der Einheiten der allgemeinen Formeln (3) und (4) mindestens 1 Gew.-% beträgt.
Insbesondere enthalten die Organopolysiloxanpartikel

5 bis 70,0 Gew.-% Einheiten der allgemeinen Formel (1),
0 bis 94,0 Gew.-% Einheiten der allgemeinen Formel (2),
1 bis 95,0 Gew.-% Einheiten der allgemeinen Formel (3),
0 Gew.-% Einheiten der allgemeinen Formel (4) und
0 bis 5,0 Gew.-% Einheiten der allgemeinen Formel (5).

Ein weiterer Gegenstand der Erfindung ist ein Verfahren zur Herstellung von aus einem einzigen Molekül bestehenden, vernetzten Organopolysiloxanpartikeln, bei dem in einem ersten Schritt durch Zudosieren von Silanen der allgemeinen Formel (9)

$$R_cSi(OR^4)_{4-c} \qquad \textbf{(9)},$$

und gegebenenfalls siliciumorganischen Verbindungen der allgemeinen Formel (10)

$$R_d(R^4O)_eSiO_{(4-d-e)/2} \qquad \textbf{(10)},$$

und gegebenenfalls siliciumorganischen Verbindungen aus Einheiten der allgemeinen Formel (11)

$$R_aSi((OR^4)_{3-a})\text{-}R^1\text{-}X\text{-}(R^1\text{-}Si(OR^4)_{3-a}))_bR_a \qquad \textbf{(11)},$$

wobei

**$R^4$** die Bedeutungen von **R**,
**c** die Werte 0, 1, 2 oder 3,
**d** und **e** jeweils unabhängig voneinander die Werte 0, 1, 2, 3 oder 4 und
**R**, **X**, **a** und **b** die vorstehenden Bedeutungen aufweisen, zu einer bewegten Mischung aus Emulgator und Wasser eine kolloidale Suspension von Organopolysiloxanpartikeln hergestellt wird und

in einem zweiten Schritt die kolloidale Suspension mit siliciumorganischer Verbindung der allgemeinen Formel (12)

$(R^5{}_3Si)_fY^1$ **(12)**,

versetzt wird, wobei

| | |
|---|---|
| **Y¹** | für die Bedeutungen **f** = 1 ein Wasserstoffatom, $-OR^6$, $-ONR^6{}_2$ oder $-OOCR^6$ und für die Bedeutungen f = 2 -O- oder -S- bedeutet, |
| $R^5$ und $R^6$ | die Bedeutungen von **R** und |
| **f** | die Werte 1 oder 2 aufweisen, |

mit der Maßgabe, daß die siliciumorganischen Verbindungen der allgemeinen Formel (12) wasserlöslich sind oder in Wasser zu einer wasserlöslichen Verbindung hydrolysieren.

Die interpartikuläre Kondensation der Organopolysiloxanpartikel wird verhindert, indem die nach dem ersten Schritt verbliebenen, kondensationsfähigen Gruppen mit ausschließlich monofunktionelle Triorganosilylgruppen enthaltenden siliciumorganischen Verbindungen abgesättigt werden.

Vorzugsweise werden bei der Hydrolyse- oder Kondensationsreaktion der siliciumorganischen Verbindungen der allgemeinen Formel (12) keine Nebenprodukte, wie Salzsäure oder Ammoniak gebildet, die die Ionenstärke des wäßrigen kolloidalen Systems wesentlich vergrößern. Besonders bevorzugt werden als siliziumorganische Verbindungen der allgemeinen Formel (12) Trimethylmethoxysilan, Trimethylethoxysilan, Hexamethyldisiloxan, Vinyldimethylmethoxysilan, Vinyldimethylethoxysilan, 1,1,3,3-Tetramethyldisiloxan und Mischungen davon eingesetzt.

Die Isolierung der Organopolysiloxanpartikel aus den kolloidalen Suspensionen nach Beendigung des zweiten Reaktionsschrittes kann nach bekannten Verfahren erfolgen, beispielsweise durch Koagulation der Latices mittels Salzzugabe oder durch Zugabe von polaren Lösungsmitteln.

Organopolysiloxanpartikel, die in der Summe mehr als ca. 15 Gew.-% an Einheiten der allgemeinen Formeln (3) und (4) enthalten, werden vorzugsweise nach Isolierung im Anschluß an den zweiten Schritt in einem dritten Reaktionsschritt in einem aprotischen Lösungsmittel mit siliciumorganischer Verbindung der allgemeinen Formel (13) und/ oder (14)

$(R^5{}_3Si)_fY^2$ **(13)**,

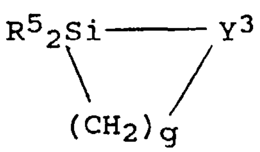

**(14)**

versetzt, wobei

| | |
|---|---|
| **Y²** | für die Bedeutungen **f** = 1 Wasserstoff-, Halogenatome, $-OR^6$, $-NR^6{}_2$, $-ONR^6{}_2$ oder $-OOCR^6$ und für die Bedeutungen f = 2 -O-, $-N(R^6)-$ oder -S-, |
| **Y³** | die Reste -O-, $-N(R^6)-$ oder -S-, |
| **g** | Werte von 1 bis 30, insbesondere 2, 3 oder 4, bedeuten und |
| **f**, $R^5$ und $R^6$ | die vorstehenden Bedeutungen aufweisen. |

Im dritten Schritt werden vorzugsweise siliciumorganische Verbindungen der allgemeinen Formel (13) eingesetzt.

Besonders bevorzugt werden als siliziumorganische Verbindungen der allgemeinen Formel (13) in diesem dritten Reaktionsschritt Trimethylchlorsilan, Dimethylchlorsilan, Vinyldimethylchlorsilan, Hexamethyldisilazan, 1,3-Divinyl-1,1,3,3-tetramethyldisilazan, oder Gemische aus Disilazanen bzw. Chlorsilanen eingesetzt.

Die eingesetzten Mengen an Verbindungen der allgemeinen Formeln (9) bis (14) werden so gewählt, daß die gewünschten Organopolysiloxanpartikel erhalten werden. Die eingesetzten Mengen an Verbindungen der allgemeinen Formeln (9) bis (11) werden im ersten Reaktionsschritt nahezu quantitativ eingebaut und steuern den Vernetzungsgrad der Organopolysiloxanpartikel in wäßriger Suspension. Die im zweiten und gegebenenfalls im dritten Reaktionsschritt eingesetzten Verbindungen der allgemeinen Formeln (12) bzw. (13) und (14) werden jeweils im Überschuß eingesetzt und somit nicht vollständig in die Organopolysiloxanpartikel eingebaut. Vorzugsweise werden 0,2 bis 10, insbesondere 0,5 bis 3 Gewichtsteile Verbindungen der allgemeinen Formeln (12) im zweiten Reaktionsschritt, bzw. der Summe der Verbindungen der allgemeinen Formeln (12), (13) und (14) im zweiten und dritten Reaktionsschritt, pro Gewichtsteil

an Verbindungen der allgemeinen Formeln (9) bis (11) eingesetzt.

Wenn ein dritter Reaktionsschritt durchgeführt wird, beträgt das Verhältnis der im zweiten Reaktionsschritt eingesetzten Menge der Verbindungen der allgemeinen Formeln (12) zu der im dritten Reaktionsschritt eingesetzten Menge der Verbindungen der allgemeinen Formel (13) und (14) vorzugsweise 1 : 10 bis 2 : 1, insbesondere 1 : 5 bis 1 : 1.

Bei dem Rest $\mathbf{R^6}$ handelt es sich bevorzugt um unsubstituierte C1- bis C6-Alkylreste und den Phenylrest, wobei Methyl-, Ethyl- und Propylreste besonders bevorzugt sind.

Besonders geeignete Emulgatoren sind Alkylsulfate, z.B. mit einer Kettenlänge von 8-18 C-Atomen, Aryl- und Alkylethersulfate mit 8-18 C-Atomen im hydrophoben Rest und 1-40 Ethylenoxid(EO)- bzw. Propylenoxid(PO)-Einheiten;

Sulfonate, z.B. Alkylsulfonate mit 8-18 C-Atomen,Alkylarylsulfonate mit 8-18 C-Atomen, Ester und Halbester der Sulfobernsteinsäure mit einwertigen Alkoholen oder Alkylphenolen mit 4-15 C-Atomen; ggf. können diese Alkohole oder Alkylphenole auch mit 1-40 EO-Einheiten ethoxyliert sein;

Alkali- und Ammoniumsalze von Carbonsäuren mit 8-20 C-Atomen im Alkyl-, Aryl-, Alkaryl- oder Aralkylrest;

Phosphorsäureteilester und deren Alkali- und Ammoniumsalze, z. B. Alkyl- und Alkarylphosphate mit 8-20 C-Atomen im organischen Rest, Alkylether- bzw. Alkaryletherphosphate mit 8-20 C-Atomen im Alkyl- bzw. Alkarylrest und 1-40 EO-Einheiten;

Alkylpolyglykolether mit 2-40 EO-Einheiten und Alkylresten von 4-20 C-Atomen;

Alkylarylpolyglykolether mit 2-40 EO-Einheiten und 8-20 C-Atomen in den Alkyl- und Arylresten;
Ethylenoxid/Propylenoxid(EO/PO)-Blockcopolymere mit 8-40 EO-bzw. PO-Einheiten;

Fettsäurepolyglykolester mit 6-24 C-Atomen und 2-40 EO-Einheiten;

Alkylpolyglykoside, Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen;

polare Gruppen enthaltende lineare Organo(poly)siloxane mit Alkoxygruppen mit bis zu 24 C-Atomen und/oder bis zu 40 EO- und/oder PO-Gruppen;

Salze von primären, sekundären und tertiären Fettaminen mit 8-24 C-Atomen mit Essigsäure, Schwefelsäure, Salzsäure und Phosphorsäuren;

Quarternäre Ammoniumsalze wie Halogenide, Sulfate, Phosphate, Acetate oder Hydroxide, deren Alkylgruppen unabhängig voneinander 1-24 C-Atome besitzen; gegebenenfalls können die Alkyl- oder Alkaryl- oder Aralkylgruppen der quarternären Ammoniumverbindungen auch teilweise ethoxyliert sein (1-40 EO-Einheiten);

Alkylpyridinium-, Alkylimidazolinium- und Alkyloxazoliniumsalze, deren Alkylkette bis zu 18 C-Atome besitzt, in Form ihrer Halogenide, Sulfate, Phosphate oder Acetate.

Bevorzugt sind aliphatisch substituierte Benzolsulfonsäuren und deren Salze sowie gegebenenfalls teilethoxylierte quarternäre Ammoniumhalogenide und -hydroxide. Besonders bevorzugt sind Dodecylbenzolsulfonsäure und Benzyldimethyl-(2-[2-(p-1,1,3,3-tetramethylbutyl-phenoxy)-ethoxy]-ethyl}-ammoniumchlorid (Benzethoniumchlorid).

Die einzusetzende Menge an Emulgator beträgt von 0,5 - 50 Gew.-%, vorzugsweise von 1,0 - 30 Gew.-%, jeweils bezogen auf die insgesamt eingesetzte Menge an siliziumorganischen Ausgangsverbindungen des ersten und zweiten Reaktionsschrittes. Die siliziumorganischen Ausgangsverbindungen der allgemeinen Formeln (9) bis (11) werden während des ersten Reaktionsschrittes bevorzugt dosiert zugegeben. Vorzugsweise werden alle Ausgangskomponenten der allgemeinen Formeln (9) bis (11) vor der Dosierung während des ersten'Reaktionsschritts im gewünschten Verhältnis gemischt; um eine homogene Mischung zu erhalten, werden gegebenenfalls zusätzlich 0,1 - 30 Gew.-% bezogen auf die Summe der Ausgangskomponenten der allgemeinen Formeln (9) bis (11) , Alkanol der Formel $R^7OH$, bei dem $R^7$ ein Alkylrest mit 1 bis 5 Kohlenstoffatomen ist, als Löslichkeitsvermittler zugesetzt, wobei die Alkanole Methanol und Ethanol besonders bevorzugt sind.

Als aprotisches organisches Lösungsmittel werden im dritten Schritt vorzugsweise die vorstehend beschriebenen Ether, Kohlenwasserstoffe, Ketone und Organopolysiloxane, insbesondere Tetrahydrofuran, Cyclohexan, Methylcyclohexan oder Toluol verwendet. Die Umsetzung sowohl im ersten (Emulsionspolykondensation/-polymerisation) als auch im zweiten Reaktionsschritt wird vorzugsweise bei 5 - 95 °C, insbesondere bei 10 - 85 °C und besonders bevorzugt bei 10 - 40 °C durchgeführt. Der pH-Wert beträgt jeweils von 1 - 12, vorzugsweise von 1 - 4 oder von 7 - 11, in Abhängigkeit von der Säure/Basestabilität der Reste **R**, $\mathbf{R^4}$, $\mathbf{R^5}$ und $\mathbf{R^6}$ der Ausgangsverbindungen (9) bis (13).

Bei der Herstellung der kolloidalen Suspensionen während des ersten Reaktionsschrittes ist es für die Stabilität der Emulsion vorteilhaft, nach Ende der Dosierung der siliziumorganischen Ausgangsverbindungen der allgemeinen Formeln (9) bis (11) noch 1 bis 24 Stunden nachzurühren. Das bei der Hydrolyse freigesetzte Alkanol kann durch Destillation, ggf. unter reduziertem Druck, entfernt werden, was aber nicht bevorzugt ist. Der Festgehalt der nach dem ersten Schritt hergestellten kolloidalen Suspension sollte vorzugsweise maximal 25 Gew.-% betragen, da sonst ein hoher Anstieg der Viskosität die weitere Umsetzung erschwert. Bei der Umsetzung der kolloidalen Suspension mit siliziumorganischer Verbindung der allgemeinen Formel (12) im zweiten Reaktionsschritt ist es zur Erzielung einer möglichst vollständigen Reaktion ebenfalls vorteilhaft, nach Ende der Zugabe von Verbindungen der allgemeinen Formel (12) noch 1 - 48 Stunden nachzurühren.

Die Umsetzung mit siliziumorganischer Verbindung der allgemeinen Formel (13) und (14) im dritten Reaktionsschritt wird vorzugsweise bei 5 - 95 °C, insbesondere bei 10 - 85 °C und besonders bevorzugt bei 10 - 40 °C durchgeführt. Zur Erzielung einer möglichst vollständigen Reaktion ist es wiederum vorteilhaft, nach Ende der Zugabe der Verbindung der allgemeinen Formel (13) und (14) noch 1 - 24 Stunden nachzurühren.

Zur strukturellen Charakterisierung der Organopolysiloxanpartikel eignet sich besonders die statische und dynamische Lichtstreuung. Statische und dynamische Lichtstreuung sind dem Fachmann bekannte, etablierte Methoden in der makromolekularen Chemie und Kolloidchemie zur Charakterisierung disperser Partikel. In der statischen Lichtstreuung mittelt man die Streuintensität bei verschiedenen Winkeln über ein genügend langes Zeitintervall und erhält Aussagen über die statischen Eigenschaften der Makromoleküle, wie dem Gewichtsmittel der Molmasse $M_w$, dem z-Mittel des Quadrats des Trägheitsradius $<R_g^2>_z$, und dem zweiten Virialkoeffizienten $A_2$, der die intra- und intermolekularen thermodynamischen Wechselwirkungen der dispergierten Partikel mit dem Lösungsmittel beschreibt. Im Gegensatz zur statischen wird bei der dynamischen Lichtstreuung die Fluktuation der Streulichtintensität als Funktion der Zeit beobachtet. Dies führt zu Aussagen über das dynamische Verhalten der untersuchten Moleküle. Gemessen werden das z-Mittel des Diffusionskoefizienten $D_z$ und damit über das Stokes-Einstein-Gesetz der hydrodynamische Radius $R_h$ und der Koeffizient $k_d$, der die Konzentrationsabhängigkeit des Diffusionskoeffizienten beschreibt.

Aus der Winkelabhängigkeit des Streulichts kann man die Teilchenform ermitteln und gegebenenfalls vorhandene Strukturierungen in Lösung aufklären. Die simultane statische und dynamische Lichtstreumessung ermöglicht es, mit einem einzigen Experiment die oben genannten Aussagen über das untersuchte System zu treffen und somit Informationen z.B. über Partikelgröße, -dispersität, und -form, sowie über Molekulargewicht und Dichte zu erhalten. Dies ist beispielsweise in M. Schmidt, Simultaneous Static and Dynamic Light Scattering: Applications to Polymer Structure Analysis, in: Dynamic Light Scattering: The Method and some Applications; Brown, W. (Hrsg.); Oxford University Press, Oxford, UK, 372-406 (1993) beschrieben.

Der Quotient aus Trägheits- und hydrodynamischem Radius, das sogenannte $\rho$-Verhältnis, liefert strukturelle Informationen über die Teilchenform, wie harte Kugel, Hohlkugel, Knäuel, Stäbchen oder Sternpolymer. Für die Teilchenform "harte Kugel" beträgt das theoretische $\rho$-Verhältnis 0,775; die bei den bevorzugten Organopolysiloxanpartikeln gemessenen Werte liegen von 0,775 bis höchstens $\rho$=1,0. Die bevorzugten Organopolysiloxanpartikel sind deshalb sphärisch.

Der Größenbereich der Organopolysiloxanpartikel stellt den Grenzbereich zwischen großen Molekülen, Oligomeren und Dendrimeren einerseits und kleinen Festkörpern andererseits dar, entspricht somit einer Nahtstelle zwischen Festkörper und Molekül. Zum einen sind kollektive Festkörpereigenschaften noch nicht ausgebildet, zum anderen ist molekulares Verhalten nicht mehr oder nur noch ansatzweise zu beobachten. Beispiele für partikuläre Strukturen dieser Größenordnung mit nahezu fixierter Konformation sind Mikrogele. Nach Antonietti (Angew. Chemie 100 (1988) 1813-1817) werden aus wäßrigen kolloidalen Systemen erhaltene Mikrogele mit Partikeldurchmessern im mesoskopischen Größenbereich von 5 bis 200 nm und Molmassen von $10^6$ bis $10^{11}$ (g/Mol) als "Typ B"-Mikrogele bezeichnet. "Typ B"-Mikrogele sind besonders interessant z.B. als Füllstoffe oder Verträglichkeitsvermittler für (optisch transparente) Polymere oder als potentielle Ausgangsmaterialien für maßgeschneiderte Katalysatorsysteme.

Die Organopolysiloxanpartikel eignen sich vor allem als Additive zur Polymermodifizierung. Weichelastische Partikel können als Schlagzähmodifier, harte Partikel als Füllstoffe eingesetzt werden. Durch Einbau reaktiver Gruppen, wie Vinyl, Allyl oder Methacrylat lassen sich die Organopolysiloxanpartikel als Reaktiv-Füllstoffe bzw. Reaktiv-Modifier verwenden, die chemisch an die Matrix angebunden werden und die mechanischen Eigenschaften der umgebenden Polymermatrix stark beeinflussen. Ferner lassen sich in Folgereaktionen aus den Organopolysiloxanpartikeln mit olefinischen Gruppen oder Azo-Funktionen gezielt partikuläre Pfropfcopolymere aus Siloxankern und Organopolymerhülle aufbauen. Hydridofunktionelle Organopolysiloxanpartikel können durch nachfolgende Hydrosilylierungsreaktionen nahezu beliebig umgesetzt und weiter funktionalisiert werden; alternativ können sie - ebenso wie vinyl- bzw. allylfunktionelle Organopolysiloxanpartikel - als einvernetzendes, verstärkendes oder elastisches Partikel in Hydrosilylierungsreaktionen eingesetzt werden.

In den nachfolgenden Beispielen sind, falls jeweils nicht anders angegeben,

a) alle Mengenangaben auf das Gewicht bezogen;
b) alle Drücke 0,10 MPa (abs.);
c) alle Temperaturen 20° C .

<u>Beispiele:</u>

Lichtstreuung:

Statische und dynamische Lichtstreuung wurden mit einer Anlage gemessen, die u. a. aus einem Stabilite™ 2060-lls Kr-Laser von Spectra-Physics, einem Goniometer Sp-86 von ALV und einem ALV-3000 Digital Strukturator/Korrelator besteht. Der Krypton-Ionenlaser arbeitete mit einer Wellenlänge von 647,1 nm.

Probenpräparation: Die Proben (Organopolysiloxanpartikel in Toluol; der jeweilige Konzentrationsbereich ist in den Beispielen angegeben) wurden dreimal durch Millex™-FGS-Filter (0.2 µm Porengröße) von Millipore filtriert. Die Meßtemperatur bei den Lichtstreuexperimenten betrug 20°C. Die dynamischen Lichtstreumessungen wurden winkelabhängig von 50° bis 130° in 20°-Schritten durchgeführt, die Korrelationsfunktionen wurden mit dem Simplex-Algorithmus ausgewertet. Beim statischen Lichtstreuexperiment wurde die Winkelabhängigkeit des Streulichts von 30° bis 140° in 5°-Schritten gemessen.

Beispiel 1

Zu einer Vorlage aus 125 g Wasser, 3 g Benzethoniumchlorid und 0,3 g Natriumhydroxidlösung (10 %ig in Wasser) wurden unter Rühren im Verlauf von 45 Minuten 25,0 g Methyltrimethoxysilan zudosiert. Nach weiteren 5 Stunden Rühren wurden 25 g der entstandenen Suspension unter Rühren mit 1,2 g Trimethylmethoxysilan versetzt und weitere 10 Stunden gerührt. Durch Zusatz von 50 ml Methanol wurde die Suspension gebrochen. Der ausgefallene Feststoff wurde abfiltriert, 3 mal mit 30 ml Methanol gewaschen und in 50 ml Toluol aufgenommen. Nach Zugabe von 1,6 g Hexamethyldisilazan und 10 Stunden Rühren wurde das Produkt mit 150 ml Methanol ausgefällt, abfiltriert und im Hochvakuum getrocknet. Es wurden 1,2 g eines weißen Pulvers der relativen Zusammensetzung $[(CH_3)_3SiO_{1/2}]_{1,38}$ $[CH_3SiO_{3/2}]_{1,0}$ erhalten. Mittels statischer und dynamischer Lichtstreuung (Lösungsmittel Toluol; Konzentrationsbereich der Messung: 0,5 - 2 g/l) wurde ein hydrodynamischer Partikelradius $R_h$ von 10,0 nm und ein Trägheitsradius $R_g$ von <10 nm ermittelt. Daraus ergibt sich ein ρ-Verhältnis von < 1,0. Das Molekulargewicht $M_w$ der monodispersen, sphärischen Partikel wurde zu $2{,}0 \times 10^6$ ermittelt. Die Organopolysiloxanpartikel sind in Toluol, Pentan, Cyclohexan, Dimethylformamid, Tetrahydrofuran, Dioxan, Diethylether, Methylmethacrylat, Styrol und Poly(dimethylsiloxan) der Viskosität 35 mPa·s gut löslich.

Beispiel 2

Zu einer Vorlage aus 125 g Wasser, 3 g Benzethoniumchlorid und 0,3 g Natriumhydroxidlösung (10 %ig in Wasser) wurde unter Rühren im Verlauf von 1 Stunde eine Mischung aus 13,3 g Methyltrimethoxysilan und 11,7 g Dimethyldimethoxysilan zudosiert. Nach weiteren 10 Stunden Rühren wurden 25 g der entstandenen Suspension unter Rühren mit 1,2 g Trimethylmethoxysilan versetzt und weitere 10 Stunden gerührt. Durch Zusatz von 50 ml Methanol wurde die Suspension gebrochen. Der ausgefallene Feststoff wurde abfiltriert, 3 mal mit 30 ml Methanol gewaschen und in 50 ml Toluol aufgenommen. Nach Zugabe von 1,6 g Hexamethyldisilazan und 10 Stunden Rühren wurde das Produkt mit 150 ml Methanol ausgefällt, abfiltriert und im Hochvakuum getrocknet. Es wurden 2,0 g eines weißen Pulvers, das aus $[(CH_3)_3SiO_{1/2}]$-, $[(CH_3)_2SiO_{2/2}]$- und $[CH_3SiO_{3/2}]$-Einheiten aufgebaut ist, erhalten. Mittels statischer und dynamischer Lichtstreuung (Lösungsmittel Toluol; Konzentrationsbereich der Messung: 0,05 - 2 g/l) wurde ein hydrodynamischer Partikelradius $R_h$ von 11,7 nm und ein Trägheitsradius $R_g$ von <10 nm ermittelt. Daraus ergibt sich ein ρ-Verhältnis von < 0,85. Das Molekulargewicht $M_W$ der monodispersen, sphärischen Partikel wurde zu $2{,}0 \times 10^6$ ermittelt. Die Organopolysiloxanpartikel sind in Toluol, Tetrahydrofuran, Chloroform, Cyclohexan, Pentan und Methylmethacrylat gut löslich.

Beispiel 3

Zu einer Vorlage aus 125 g Wasser, 3 g Benzethoniumchlorid und 0,3 g Natriumhydroxidlösung (10 %ig in Wasser) wurde unter Rühren im Verlauf von 1 Stunde eine Mischung aus 8,2 g Methyltrimethoxysilan und 16,8 g Dimethyldimethoxysilan zudosiert. Es wurde weiter wie in Beispiel 2 verfahren. Es wurden 1,7 g eines weißen Pulvers, das aus

$[(CH_3)_3SiO_{1/2}]$-, $[(CH_3)_2SiO_{2/2}]$- und $[CH_3SiO_{3/2}]$-Einheiten aufgebaut ist, erhalten. Mittels statischer und dynamischer Lichtstreuung (Lösungsmittel Toluol; Konzentrationsbereich der Messung: 0,05 - 2 g/l) wurde ein hydrodynamischer Partikelradius $R_h$ von 17,3 nm und ein Trägheitsradius $R_g$ von 13,7 nm ermittelt. Daraus ergibt sich ein ρ-Verhältnis von 0,79. Das Molekulargewicht $M_w$ der monodispersen, sphärischen Partikel wurde zu $5,13x10^6$ ermittelt. Die Poly (organosiloxan)-Partikel sind in Toluol, Tetrahydrofuran, Chloroform, Cyclohexan, Pentan und Methylmethacrylat gut löslich.

Beispiel 4

Zu einer Vorlage aus 125 g Wasser, 3 g Benzethoniumchlorid und 0,3 g Natriumhydroxidlösung (10 %ig in Wasser) wurde unter Rühren im Verlauf von 1 Stunde eine Mischung aus 2,8 g Methyltrimethoxysilan und 22,2 g Dimethyldimethoxysilan zudosiert. 25 g der entstandenen Suspension wurden unter Rühren mit 1,0 g Trimethylmethoxysilan versetzt und weitere 48 Stunden gerührt. Durch Zusatz von 50 ml Methanol wurde die Suspension gebrochen. Der ausgefallene Feststoff wurde abfiltriert, 3 mal mit 30 ml Methanol gewaschen und in wenig Toluol aufgenommen. Das Produkt wurde mit Methanol ausgefällt, abfiltriert und im Hochvakuum getrocknet. Es wurden 1,5 g eines weißen, gummielastischen Pulvers, das aus $[(CH_3)_3SiO_{1/2}]$-, $[(CH_3)_2SiO_{2/2}]$- und $[CH_3SiO_{3/2}]$-Einheiten aufgebaut ist, erhalten. Mittels statischer und dynamischer Lichtstreuung (Lösungsmittel Toluol; Konzentrationsbereich der Messung: 0,05 - 2 g/l) wurde ein hydrodynamischer Partikelradius $R_h$ von 24,5 nm und ein Trägheitsradius $R_g$ von 21,3 nm ermittelt. Daraus ergibt sich ein ρ-Verhältnis von 0,87. Das Molekulargewicht $M_w$ der monodispersen, sphärischen Partikel wurde zu $5,70x10^6$ ermittelt. Die Organopolysiloxanpartikel sind in Toluol, Tetrahydrofuran, Chloroform, Cyclohexan, Pentan und Methylmethacrylat gut löslich.

Beispiel 5

Zu einer Vorlage aus 125 g Wasser, 3 g Benzethoniumchlorid und 0,3 g Natriumhydroxidlösung (10 %ig in Wasser) wurde unter Rühren im Verlauf von 1 Stunde eine Mischung aus 1,4 g Methyltrimethoxysilan und 23,6 g Dimethyldimethoxysilan zudosiert. Es wurde weiter wie in Beispiel 4 verfahren. Es wurden 1,8 g eines weißen, gummielastischen Pulvers, das aus $[(CH_3)_3SiO_{1/2}]$-, $[(CH_3)_2SiO_{2/2}]$- und $[CH_3SiO_{3/2}]$-Einheiten aufgebaut ist, erhalten. Mittels statischer und dynamischer Lichtstreuung (Lösungsmittel Toluol; Konzentrationsbereich der Messung: 0,05 - 2 g/l) wurde ein hydrodynamischer Partikelradius $R_h$ von 32,0 nm und ein Trägheitsradius Rg von 28,5 nm ermittelt. Daraus ergibt sich ein p-Verhältnis von 0,85. Das Molekulargewicht $M_w$ der monodispersen, sphärischen Partikel wurde zu $6,50x10^6$ ermittelt. Die Organopolysiloxanpartikel sind in Toluol, Tetrahydrofuran, Chloroform, Cyclohexan und Pentan gut löslich.

Beispiel 6

Zu einer Vorlage aus 125 g Wasser, 2,5 g Benzethoniumchlorid und 0,3 g Natriumhydroxidlösung (10 %ig in Wasser) wurden unter Rühren im Verlauf von 45 Minuten 22,0 g Methyltrimethoxysilan zudosiert. Nach 3 Stunden Rühren wurden unter Rühren im Verlauf von 30 Minuten 3,0 g Vinyltrimethoxysilan zugegeben und weitere 10 Stunden gerührt. 25 g der entstandenen Suspension wurden unter Rühren mit 1,34 g Vinyldimethylmethoxysilan versetzt und weitere 10 Stunden gerührt. Durch Zusatz von 50 ml Methanol wurde die Suspension gebrochen. Der ausgefallene Feststoff wurde abfiltriert, 3 mal mit 30 ml Methanol gewaschen und in 50 ml Toluol aufgenommen. Nach Zugabe von 1,73 g 1,3-Divinyl-1,1,3,3-Tetramethyldisilazan und 10 Stunden Rühren wurde das Produkt mit 150 ml Methanol ausgefällt, abfiltriert und im Hochvakuum getrocknet. Es wurden 2,3 g eines weißen Pulvers der relativen Zusammensetzung $[(CH_3)_2(H_2C{=}CH)SiO_{1/2}]_{1,20}[(H_2C{=}CH)SiO_{3/2}]_{0,11}[CH_3SiO_{3/2}]_{0,89}$ erhalten. Mittels statischer und dynamischer Lichtstreuung (Lösungsmittel Toluol; Konzentrationsbereich der Messung: 1,0 - 2,5 g/l) wurde ein hydrodynamischer Partikelradius $R_h$ von 11,9 nm und ein Trägheitsradius Rg von 10 nm ermittelt. Daraus ergibt sich ein ρ-Verhältnis von 0,84. Das Molekulargewicht $M_w$ der monodispersen, sphärischen Partikel wurde zu $2,0x10^6$ ermittelt. Der Einbau der olefinischen Vinylgruppen wurde qualitativ durch IR-Spektroskopie (KBr-Preßling, $\nu_{C=C}$ 1602 $cm^{-1}$ und durch $^1H$-NMR-Spektroskopie ($CDCl_3$, δ ($CH{=}CH_2$) 5,1-6,5 ppm) nachgewiesen. Die Organopolysiloxanpartikel sind in Toluol, Pentan, Cyclohexan, Dimethylformamid, Tetrahydrofuran, Dioxan, Diethylether, Methylmethacrylat, Styrol und Poly(dimethylsiloxan) der Viskosität 35 mPa·s gut löslich.

Beispiel 7

Zu einer Vorlage aus 125 g Wasser und 10 g einer Lösung aus 10 Teilen Dodecylbenzolsulfonsäure, 0,75 Teilen Natriumhydroxid und 100 Teilen Wasser wurden unter Rühren im Verlauf von 45 Minuten 15,0 g Triethoxysilan zudosiert. Nach 10 Stunden Rühren wurden 25 g der entstandenen Suspension unter Rühren mit 1,0 g 1,1,3,3-Tetramethyldisiloxan versetzt und weitere 48 Stunden gerührt. Durch Zusatz von 50 ml Methanol wurde die Suspension gebrochen. Der ausgefallene Feststoff wurde abfiltriert, in 40 ml Aceton aufgenommen, durch Zugabe von 200 ml Methanol erneut ausgefällt und abfiltriert. Nach Aufnahme in Tetrahydrofuran wurde unter Stickstoff mit 5 g Trimethylchlorsilan versetzt. Nach 10 Stunden Rühren wurden alle flüchtigen Bestandteile entfernt und der Rückstand in 40 ml Petrolether (Siedebereich 40-60°C) aufgenommen. Das Produkt wurde durch Zugabe von 40 ml Methanol ausgefällt, abfiltriert und im Hochvakuum getrocknet. Es wurden 2,5 g eines weißen Pulvers, das aus $[(CH_3)_2HSiO_{1/2}]$-, $[(CH_3)_3SiO_{1/2}]$- und $[HSiO_{3/2}]$-Einheiten aufgebaut ist, erhalten. Mittels statischer und dynamischer Lichtstreuung (Lösungsmittel Toluol; Konzentrationsbereich der Messung: 1,0 - 3,0 g/l) wurde ein hydrodynamischer Partikelradius $R_h$ von 9,5 nm und ein Trägheitsradius $R_g$ von <10 nm ermittelt. Daraus ergibt sich ein ρ-Verhältnis von < 1,0. Das Molekulargewicht $M_w$ der monodispersen, sphärischen Partikel wurde zu $1{,}6 \times 10^6$ ermittelt. Der Einbau der Si-H-Funktionen wurde qualitativ durch IR-Spektroskopie (KBr-Preßling, $\nu_{Si\text{-}H}$ 2238 $cm^{-1}$) und durch $^1$H-NMR-Spektroskopie ($CDCl_3$, δ Si-H 4,0-5,5 ppm) nachgewiesen. Die Organopolysiloxanpartikel sind in Toluol, Pentan, Cyclohexan, Tetrahydrofuran, Dioxan, Diethylether und Poly(dimethylsiloxan) der Viskosität 35 mPa·s gut löslich.

Beispiel 8

Zu einer Vorlage aus 125 g Wasser, 2,5 g Benzethoniumchlorid und 0,3 g Natriumhydroxidlösung (10 %ig in Wasser) wurden unter Rühren im Verlauf von 45 Minuten 22,0 g Methyltrimethoxysilan zudosiert. Nach 5 Stunden Rühren wurde unter Rühren im Verlauf von 30 Minuten eine Mischung aus 0,25 g $[(C_2H_5O)_3Si\text{-}(CH_2)_3\text{-}N(CH_3)\text{-}C(O)\text{-}(CH_2)_2\text{-}C(CN)(CH_3)\text{-}N{=}]_2$ ["$(C_2H_5O)_3$Si-Azo-Si$(C_2H_5O)_3$"] und 2,75 g Methyltrimethoxysilan zugegeben und weitere 10 Stunden gerührt. 25 g der entstandenen Suspension wurden unter Rühren mit 1,2 g Trimethylmethoxysilan versetzt und weitere 10 Stunden gerührt. Durch Zusatz von 50 ml Methanol wurde die Suspension gebrochen. Der ausgefallene Feststoff wurde abfiltriert, 3 mal mit 30 ml Methanol gewaschen und in 50 ml Tetrahydrofuran aufgenommen. Nach Zugabe von 1,6 g Hexamethyldisilazan und 10 Stunden Rühren wurde das Produkt mit 150 ml Methanol ausgefällt, abfiltriert und im Hochvakuum getrocknet. Es wurden 1,2 g eines weißen Pulvers der relativen Zusammensetzung $[(CH_3)_3SiO_{1/2}]_{1,20}[CH_3SiO_{3/2}]_{1,0}$["$O_{3/2}$Si-Azo-Si$O_{3/2}$"]$_{0,002}$ erhalten. Mittels statischer und dynamischer Lichtstreuung (Lösungsmittel Toluol; Konzentrationsbereich der Messung: 1,0 - 2,5 g/l; Messung nach Tempern der Probe für 48 Stunden bei 75°C) wurde ein hydrodynamischer Partikelradius $R_h$ von 9,8 nm und ein Trägheitsradius $R_g$ von <10 nm ermittelt. Daraus ergibt sich ein ρ-Verhältnis von < 1,0 . Das Molekulargewicht $M_w$ der monodispersen, sphärischen Partikel wurde zu $0{,}86 \times 10^6$ ermittelt. Der Einbau des azofunktionellen Silans wurde qualitativ und quantitativ durch DSC-Messungen nachgewiesen. Die Organopolysiloxanpartikel sind in Toluol, Pentan, Cyclohexan, Tetrahydrofuran, Dioxan und Methylmethacrylat gut löslich.

Vergleichsbeispiel 1

Analog zu Beispiel 1 wurden zu einer Vorlage aus 125 g Wasser, 3 g Benzethoniumchlorid und 0,3 g Natriumhydroxidlösung (10 %ig in Wasser) unter Rühren im Verlauf von 45 Minuten 25,0 g Methyltrimethoxysilan zudosiert. Nach weiteren 5 Stunden Rühren wurden 25 g der entstandenen Suspension durch Zusatz von 50 ml Methanol gebrochen. Der ausgefallene Feststoff wurde abfiltriert und 3 mal mit 30 ml Methanol gewaschen. Er erwies sich als unlöslich in Toluol und konnte nicht weiter umgesetzt und charakterisiert werden.

Vergleichsbeispiel 2

Zu einer Vorlage aus 125 g Wasser, 3 g Benzethoniumchlorid und 0,3 g Natriumhydroxidlösung (10 %ig in Wasser) wurde unter Rühren im Verlauf von 60 Minuten eine Mischung aus 19,5 g Methyltrimethoxysilan und 5,5 g Trimethylmethoxysilan zudosiert. Nach weiteren 10 Stunden Rühren wurden 25 g der entstandenen Suspension durch Zusatz von 50 ml Methanol gebrochen. Der ausgefallene Feststoff wurde abfiltriert und 3 mal mit 30 ml Methanol gewaschen. Er erwies sich als unlöslich in Toluol und konnte nicht weiter umgesetzt und charakterisiert werden.

Vergleichsbeispiel 3

Zu einer Vorlage aus 125 g Wasser, 3 g Benzethoniumchlorid und 0,3 g Natriumhydroxidlösung (10 %ig in Wasser) wurde unter Rühren im Verlauf von 90 Minuten eine Mischung aus 14,0 g Methyltrimethoxysilan und 11,0 g Trimethylmethoxysilan zudosiert. Nach weiteren 15 Stunden Rühren wurden 25 g der entstandenen Suspension durch Zusatz von 50 ml Methanol gebrochen. Es wurde ein hochviskoses öl erhalten.

## Patentansprüche

1. Aus einem einzigen Molekül bestehende, vernetzte Organopolysiloxanpartikel, welche aufgebaut sind aus 0,5 bis 80,0 Gew.-% Einheiten der allgemeinen Formel

$$[R_3SiO_{1/2}] \qquad \textbf{(1)},$$

0 bis 99,0 Gew.-% Einheiten der allgemeinen Formel

$$[R_2SiO_{2/2}] \qquad \textbf{(2)},$$

0 bis 99,5 Gew.-% Einheiten der allgemeinen Formel

$$[RSiO_{3/2}] \qquad \textbf{(3)},$$

0 bis 80,0 Gew.-% Einheiten der allgemeinen Formel

$$[SiO_{4/2}] \qquad \textbf{(4)},$$

und
0 bis 20,0 Gew.-% Einheiten der allgemeinen Formel

$$[R_aSi(O_{(3-a)/2})\text{-}R^1\text{-}X\text{-}(R^1\text{-}Si(O_{(3-a)/2}))_bR_a] \qquad \textbf{(5)},$$

wobei

**R** Wasserstoffatome oder gleiche oder verschiedene einwertige SiC-gebundene, gegebenenfalls substituierte $C_1$- bis $C_{18}$-Kohlenwasserstoffreste,
**$R^1$** gleiche oder verschiedene zweiwertige SiC-gebundene, gegebenenfalls substituierte $C_1$- bis $C_{18}$-Kohlenwasserstoffreste, welche durch zweibindige, beidseitig an Kohlenstoffatome gebundene Reste aus der Gruppe -O-, -COO-, -OOC-, $-CONR^2-$, $-NR^2CO-$ und -CO- unterbrochen sein können,
**$R^2$** ein Wasserstoffatom oder einen Rest **R**,
**X** einen Rest aus der Gruppe -N=N-, -O-O-, -S-S- und $-C(C_6H_5)_2-C(C_6H_5)_2-$,
**a** die Werte 0, 1 oder 2 und,
**b** die Werte 0 oder 1 bedeuten,
mit der Maßgabe, daß die Summe der Einheiten der allgemeinen Formeln (3) und (4) mindestens 0,5 Gew.-% beträgt, die einen durch simultane statische und dynamische Lichtstreuung meßbaren mittleren Durchmesser von 5 bis 200 nm aufweisen, bei denen mindestens 80 % der Partikel einen Durchmesser besitzen, der höchstens 30 % vom mittleren Durchmesser abweicht, dadurch gekennzeichnet, daß die Partikel in einem Lösungsmittel, das ausgewählt wird aus Toluol, Tetrahydrofuran und Wasser bei 20°C zu mindestens 5 Gew.-% löslich sind.

2. Organopolysiloxanpartikel nach Anspruch 1, bei denen die Gewichtsmittel der Molmassen $M_w$ $10^5$ bis $10^{10}$ betragen.

3. Verfahren zur Herstellung von aus einem einzigen Molekül bestehenden Organopolysiloxanpartikeln gemäß einem der Ansprüche 1 bis 2, bei dem
in einem ersten Schritt durch Zudosieren von Silanen der allgemeinen Formel (9)

$$R_cSi(OR^4)_{4-c} \qquad \textbf{(9)},$$

und gegebenenfalls siliciumorganischen Verbindungen der allgemeinen Formel (10)

$$R_d(R^4O)_eSiO_{\frac{4-d-e}{2}} \qquad (10),$$

und gegebenenfalls siliciumorganischen Verbindungen aus Einheiten der allgemeinen Formel (11)

$$R_aSi((OR^4)_{3-a})\text{-}R^1\text{-}X\text{-}(R^1\text{-}Si(OR^4)_{3-a}))_bR_a \qquad \mathbf{(11)},$$

wobei

**$R^4$** die Bedeutungen von **R**,
**c** die Werte 0, 1, 2 oder 3,
**d** und **e** jeweils unabhängig voneinander die Werte 0, 1, 2, 3 oder 4 und
**R**, **X**, **a** und **b** die in Anspruch 1 angegebenen Bedeutungen aufweisen,
zu einer bewegten Mischung aus Emulgator und Wasser eine kolloidale Suspension von Organopolysiloxanpartikeln hergestellt wird und
in einem zweiten Schritt die kolloidale Suspension mit siliciumorganischer Verbindung der allgemeinen Formel (12)

$$(R^5{}_3Si)_fY^1 \qquad \mathbf{(12)},$$

versetzt wird, wobei
**$Y^1$** für die Bedeutungen **f** = 1 ein Wasserstoffatom, $-OR^6$, $-ONR^6{}_2$ oder $-OOCR^6$ und für die Bedeutungen **f** = 2 -O- oder -S- bedeuten,
**$R^5$** und **$R^6$** die Bedeutungen von **R** und
**f** die Werte 1 oder 2 aufweisen,
mit der Maßgabe, daß die siliciumorganischen Verbindungen der allgemeinen Formel (12) wasserlöslich sind oder in Wasser zu einer wasserlöslichen Verbindung hydrolysieren.

**4.** Verfahren nach Anspruch 3, bei dem Organopolysiloxanpartikel, die in der Summe mehr als 15 Gew.-% an Einheiten der allgemeinen Formeln (3) und (4) enthalten, im Anschluß an den zweiten Schritt in einem dritten Reaktionsschritt in einem aprotischen Lösungsmittel mit siliciumorganischer Verbindung der allgemeinen Formel (13) und/oder (14)

$$(R^5{}_3Si)_fY^2 \qquad \mathbf{(13)},$$

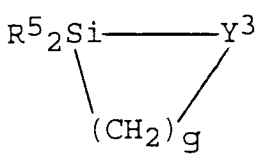

(14) ,

versetzt werden, wobei

**$Y^2$** für die Bedeutungen **f** = 1 Wasserstoff-, Halogenatome, $OR^6$, $-NR^6{}_2$, $-ONR^6{}_2$ oder $-OOCR^6$ und für die Bedeutungen **f** = 2 -O-, $-N(R^6)$- oder -S- bedeutet
$Y^3$ die Reste -O-, $-N(R^6)$- oder -S-,
g Werte von 1 bis 30 bedeuten und
**f**, **$R^5$** und **$R^6$** die in Anspruch 3 angegebenen Bedeutungen aufweisen.

## Claims

**1.** Crosslinked organopolysiloxane particles which consist of a single molecule and which are built up from 0.5 to 80.0% by weight of units of the general formula

$$[R_3SiO_{1/2}] \quad (1),$$

0 to 99.0% by weight of units of the general formula

$$[R_2SiO_{2/2}] \quad (2),$$

0 to 99.5% by weight of units of the general formula

$$[RSiO_{3/2}] \quad (3),$$

0 to 80.0% by weight of units of the general formula

$$[SiO_{4/2}] \quad (4)$$

and
0 to 20.0% by weight of units of the general formula

$$[R_aSi(O_{(3-a)/2})\text{-}R^1\text{-}X\text{-}(R^1\text{-}Si(O_{(3-a)/2}))_bR_a] \quad (5),$$

in which

R are hydrogen atoms or identical or different monovalent SiC-bonded, optionally substituted $C_1$- to $C_{18}$-hydrocarbon radicals,
$R^1$ identical or different divalent SiC-bonded, optionally substituted $C_1$- to $C_{18}$-hydrocarbon radicals, which can be interrupted by divalent radicals from the group consisting of -O-, -COO-, -OOC-, $-CONR^2-$, $-NR^2CO-$ and -CO- bonded to carbon atoms on both sides,
$R^2$ is a hydrogen atom or a radical R,
x is a radical from the group consisting of -N=N-, -O-O-, -S-S- and $-C(C_6H_5)_2-C(C_6H_5)_2-$,
a has the values 0, 1 or 2 and
b has the values 0 or 1,

with the proviso that the sum of the units of the general formulae (3) and (4) is at least 0.5% by weight, which have an average diameter, which is measurable by simultaneous static and dynamic light scattering, of 5 to 200 nm , where at least 80% of the particles have a diameter which deviates from the average diameter by not more than 30%, characterized in that the particles are soluble at 20°C to the extent of at least 5% by weight in a solvent which is selected from the group consisting of toluene, tetrahydrofuran and water.

**2.** Organopolysiloxane particles according to Claim 1, in which the weight-average molecular weights $M_w$ are $10^5$ to $10^{10}$.

**3.** Process for the preparation of organopolysiloxane particles consisting of a single molecule according to either of Claims 1 or 3, in which in a first step, by metering a silane of the general formula (9)

$$R_cSi(OR^4)_{4-c} \quad (9),$$

and, if appropriate, an organosilicon compound of the general formula (10)

$$R_d(R^4O)_eSiO_{\frac{4-d-e}{2}} \quad (10),$$

and, if appropriate, an organosilicon compound of units of the general formula (11)

$$R_aSi((OR^4)_{3-a})-R^1-X-(R^1-Si(OR^4)_{3-a}))_bR_a \quad (11),$$

in which

| | |
|---|---|
| $R^4$ | has the meanings of R, |
| c | has the values 0, 1, 2 or 3, |
| d and e | in each case independently of one another have the values 0, 1, 2, 3 or 4 and |
| R, X, a and b | have the meanings given in Claim 1, |

to an agitated mixture of emulsifier and water, a colloidal suspension of organopolysiloxane particles is prepared and
in a second step, an organosilicon compound of the general formula (12)

$$(R^5{}_3Si)_fY^1 \quad (12),$$

in which

| | |
|---|---|
| $Y^1$, | if f = 1, is a hydrogen atom, $-OR^6$, $-ONR^6{}_2$ or $-OOCR^6$ and<br>if f = 2, is -O- or -S-, |
| $R^5$ and $R^6$ | have the meaning of R and |
| f | has the values 1 or 2, |

with the proviso that the organosilicon compound of the general formula (12) is water-soluble or hydrolyzes in water to give a water-soluble compound, is added to the colloidal suspension.

**4.** Process according to Claim 3, in which an organosilicon compound of the general formula (13) and/or (14)

$$(R^5{}_3Si)_fY^2 \quad (13),$$

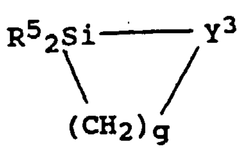

**(14),**

| | |
|---|---|
| $Y^2$, | if f = 1, is hydrogen or halogen atoms, $-OR^6$, $-NR^6{}_2$, $-ONR^6{}_2$ or $-OOCR^6$ and<br>if f = 2, is -O-, $-N(R^6)-$ or -S-, |
| $Y^3$ | is the radicals -O-, $-N(R^6)-$ or -S-, |
| g | has values from 1 to 30 and |
| f, | $R^5$ and $R^6$ have the meanings given in Claim 3, |

are added after the second step, in a third reaction step in an aprotic solvent, to organopolysiloxane particles which contain more than 15% by weight in total of units of the general formulae (3) and (4).

## Revendications

1. Particules monomoléculaires d'organopolysiloxane réticulées constituées de 0,5 à 80,0% en poids d'unités de formule générale

$$[R_3SiO_{1/2}] \quad (1)$$

0 à 99,0% en poids d'unités de formule générale

$$[R_2SiO_{2/2}] \quad (2)$$

0 à 99,5% en poids d'unités de formule générale

$$[RSiO_{3/2}] \quad (3)$$

0 à 80,0% en poids d'unités de formule générale

$$[SiO_{4/2}] \quad (4)$$

et
0 à 20,0% en poids d'unités de formule générale

$$[R_aSi(O_{(3-a)/2})\text{-}R^1\text{-}X\text{-}(R^1\text{-}Si(O_{(3-a)/2)})_bR_a] \quad (5)$$

dans lesquelles

R représente des atomes d'hydrogène ou des radicaux hydrocarbure en C1- à C18- monovalents liés à SiC, identiques ou différents et éventuellement substitués,
$R^1$ représente des radicaux hydrocarbure en $C_1$- à $C_{18}$-bivalents liés à SiC, identiques ou différents et éventuellement substitués, qui peuvent être interrompus par des radicaux à double liaison, liés des deux côtés à des atomes de carbone, des groupes -O-, -COO-, -OOC-, -CONR$^2$- -NR$^2$CO- et -CO-,
$R^2$ représente un atome d'hydrogène ou un radical R,
X représente un radical des groupes -N=N-, -O-O-, -S-S- et -C($C_6H_5$)$_2$-C($C_6H_5$)$_2$-,
a est égal à 0, 1 ou 2 et
b est égal à 0 ou 1,
avec la condition que la somme des unités de formules générales (3) et (4) atteigne au minimum 0,5% en poids, avec un diamètre moyen mesurable par dispersion lumineuse statique et dynamique simultanée de 5 à 200 nm, 80% au moins des particules présentant un diamètre différant de 30% maximum du diamètre moyen, caractérisées en ce que les particules sont solubles à au moins 5% en poids à 20°C dans un solvant choisi parmi le toluène, le tétrahydrofuranne et l'eau.

2. Particules d'organopolysiloxane selon la revendication 1, dont les moyennes pondérales des masses molaires $M_w$ sont de $10^5$ à $10^{10}$.

3. Procédé pour la préparation de particules monomoléculaires d'organopolysiloxane selon l'une des revendications 1 à 2, dans lequel, dans une première étape, on ajoute des silanes de formule générale (9)

$$R_cSi(OR^4)_{4-c} \quad (9)$$

et éventuellement des composés organosiliciques de formule générale (10)

$$R_d(R^4O)_e\,SiO_{\frac{4-d-e}{2}} \qquad (10)$$

et éventuellement des composés organosiliciques d'unités de formule générale (11)

$$R_aSi((OR^4)_{3-a})-R^1-X-(R^1-Si(OR^4)_{3-a}))_bR_a \qquad (11)$$

dans lesquelles

| | |
|---|---|
| $R^4$ | a les significations de R, |
| c | est égal à 0, 1, 2 ou 3, |
| d et e | ont chacun indépendamment l'un de l'autre la valeur 0, 1, 2, 3 ou 4 et |
| R, X, a et b | ont les significations indiquées dans la revendication 1, |

à un mélange brassé d'émulsifiant et d'eau pour obtenir une suspension colloïdale de particules d'organopolysiloxane et

que dans une deuxième étape, la suspension colloïdale est mélangée à un composé organosilicique de formule générale (12)

$$(R^5{}_3Si)_fY^1 \qquad (12)$$

dans laquelle

| | |
|---|---|
| $Y^1$ | représente, pour f = 1, un atome d'hydrogène, un $-OR^6$, un $-ONR^6{}_2$ ou un $-OOCR^6$ et représente, pour f = 2, un -O- ou un -S-, |
| $R^5$ et $R^6$ | ont les significations de R et |
| f | est égal à 1 ou 2, |

avec la condition que les composés organosiliciques de formule générale (12) soient solubles dans l'eau ou s'y hydrolysent pour donner un composé soluble dans l'eau.

**4.** Procédé selon la revendication 3, dans lequel des particules d'organopolysiloxane contenant au total plus de 15% en poids d'unités de formules générales (3) et (4) sont, dans une troisième étape de réaction subséquente à la deuxième étape, mélangées dans un solvant aprotique à un composé organosilicique de formule générale (13) et/ou (14)

$$(R^5{}_3Si)_fY^2 \qquad (13)$$

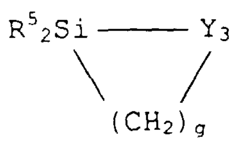

(14)

dans lesquelles

| | |
|---|---|
| $Y^2$ | représente, pour f = 1, des atomes d'hydrogène, des atomes d'halogène, un $-OR^6$, un $-NR^6{}_2$, un $-ONR^6{}_2$ ou un $-OOCR^6$, et représente, pour f = 2, un -O-, un $N(R^6)$- ou un -S-, |
| $Y^3$ | représente les radicaux -O-, $-N(R^6)$- ou -S-, |
| g | a une valeur de 1 à 30 et |
| f, $R^5$ et $R^6$ | ont les significations indiquées à la revendication 3. |